# FASCICULE DE BREVET EUROPEEN

(11) **EP 1 524 795 B1**
(45) Date de publication et mention de la délivrance du brevet: **02.08.2006**
(21) Numéro de dépôt: 04292137.9
(22) Date de dépôt: 06.09.2004
(51) Int. Cl.: H04L 9/18, H04L 9/08

(54) **Chiffrement de données dans un appareil électronique à plusieurs processeurs symétriques**
Datenverschlüsselung in einem elektronischen Gerät mit mehreren symmetrischen Prozessoren
Data encryption in an electronic apparatus with several symmetrical processors

(30) Priorité: 17.10.2003 FR 0312206
(43) Date de publication de la demande: 20.04.2005
(73) Titulaire: STMicroelectronics S.A., 92120 Montrouge (FR)
(72) Inventeur: Volp, Marcus, 76137 Karlsruhe (DE); Anguille, Claude, 13090 Aix-en-Provence (FR)
(74) Mandataire: Verdure, Stéphane

(56) Documents cités:
- EP-A- 1 229 427
- WO-A-99/12310
- US-A- 5 438 622
- US-A- 6 061 449

## Description

La présente invention concerne de façon générale le chiffrement ou cryptage de données destinées à être utilisées dans un ou plusieurs processeurs, lorsque ces données doivent être stockées dans une mémoire externe aux processeurs.

Elle trouve des applications, en particulier, dans les appareils électroniques ayant une architecture à plusieurs processeurs symétriques et à mémoire externe partagée (ou architecture SMP, de l'anglais "Symetric Multi-Processor"). Plus précisément, la présente invention concerne les applications dans lesquelles on souhaite empêcher qu'un utilisateur non autorisé accède à des données de façon exploitable, et dans lesquelles lesdites données doivent, au moins en partie, pouvoir être accédées par plus d'un circuit.

On fait ici référence au terme "données" pour désigner indifféremment n'importe quel code binaire qu'il s'agisse de programmes exécutables, ou de données binaires qui sont traitées par ces programmes. De plus, on fait référence au terme "circuit" pour désigner indifféremment n'importe quelle unité fonctionnelle d'un appareil électronique reliée à d'autres unités fonctionnelles via un ou plusieurs bus de communication, qu'il s'agisse d'un processeur, d'un contrôleur de périphérique (par exemple un contrôleur de disque), une carte réseau,etc.

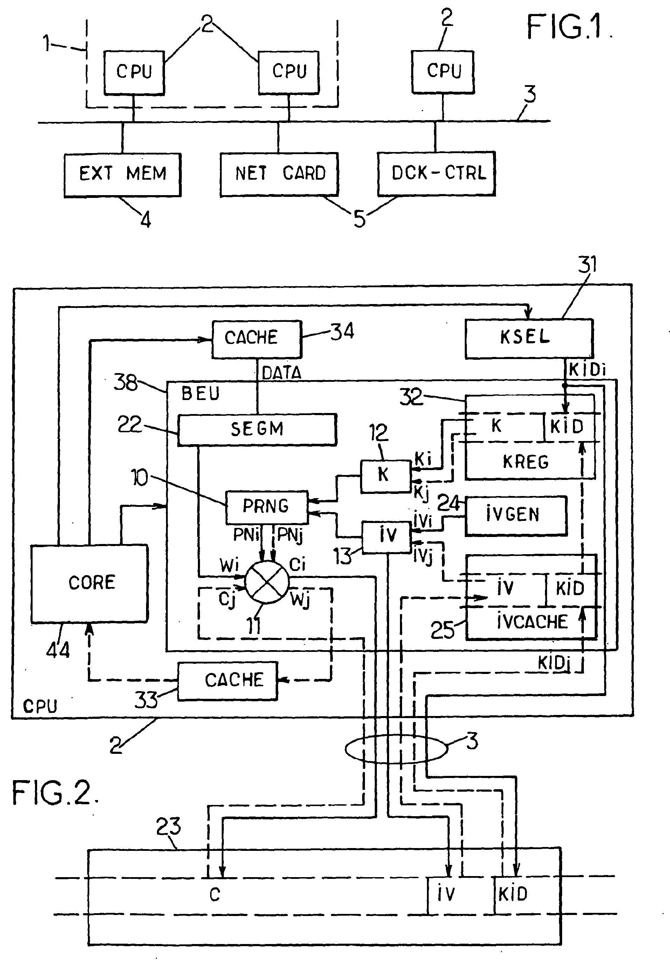

La figure 1 illustre schématiquement l'architecture SMP d'un appareil électronique, à laquelle s'applique la présente invention. Plusieurs processeurs 2 (CPU) sont couplés à une mémoire externe 4 (EXT MEM), par l'intermédiaire d'un ou plusieurs bus 3. On peut définir une zone 1, dite zone sécurisée, à l'intérieur de laquelle se trouve un ou plusieurs processeurs 2, et à l'intérieur de laquelle on considère que les données traitées ne sont pas susceptibles d'être piratées. En pratique, la zone sécurisée 1 comprend le plus souvent une ou plusieurs puces de circuit intégré correspondant à des processeurs respectifs, la mémoire 4 étant une autre puce qui n'appartient pas à la zone sécurisée. En outre, d'autres circuits 5, comme un contrôleur de disque (DSK CTRL) ou une carte réseau (NET CARD), peuvent être reliés aux processeurs 2 par l'intermédiaire des bus 3.

Le chiffrement auquel s'applique la présente invention concerne plus particulièrement celui des données transitant sur le ou les bus 3, entre la mémoire 4 et le ou les processeurs 2 de la zone 1. Dans le jargon de l'Homme du métier, on parle de chiffrement de la mémoire ou encore de chiffrement du bus. Ce chiffrement consiste à coder les données stockées dans la mémoire 4 au moyen d'une clé de chiffrement de bus connue par les processeurs concernés.

Des exemples de solution pour chiffrer une mémoire externe à un microprocesseur sont décrits dans les brevets américains 5 825 878, 5 982 887, et 6 041 449.

Ces solutions ne sont pas adaptées au cas des systèmes à architecture SMP, dans la mesure où l'on doit utiliser la même clé de chiffrement de bus pour chiffrer et pour déchiffrer les données alors que chaque processeur utilise une clé de chiffrement de bus qui lui est propre. En effet, des mesures doivent être prises pour permettre à un autre processeur de la zone sécurisée de déchiffrer, en vue de les utiliser, des données chiffrées et stockées dans la mémoire externe partagée par un autre processeur de ladite zone sécurisée. Ces mesures doivent toutefois être compatibles avec le caractère de clé secrète des clés de chiffrement de bus.

Une autre contrainte est liée à la méthode de chiffrement utilisée. Dans l'art antérieur, on utilise généralement des chiffrements par blocs avec des algorithmes de type DES ("Data Encryption System") ou AES ("Advanced Encryption System"), selon un mode par carnet de codage électronique dit mode ECB ("Electronic Code Book") ou un mode par chaînage de blocs dit mode CBC ("Cipher-Block Chaining"). La taille d'un bloc dépend de l'algorithme de chiffrement utilisé. Dans le mode ECB, deux blocs identiques sont chiffrés de la même manière. Des attaques sont donc possibles, par la technique dite "du dictionnaire", dans la mesure où la redondance de messages chiffrés de façon identique peut permettre l'identification des messages en clair. Par opposition, dans le mode CBC, chaque bloc est chiffré en fonction des blocs précédents. Ce mode est plus robuste. Néanmoins, il nécessite un accès séquentiel à la mémoire, ce qui le rend incompatible avec le chiffrement de données auxquelles on souhaite pouvoir accéder aléatoirement dans la mémoire externe.

La présente invention vise à proposer, dans le contexte d'un appareil électronique à architecture SMP, une nouvelle technique de chiffrement, par un processeur, de données à stocker dans une mémoire externe à ce processeur, lorsque les données doivent pouvoir être exploitées par plus d'un processeur.

A cet effet, un premier aspect de l'invention prévoit un procédé de chiffrement dans un circuit d'un appareil électronique, de données à stocker dans une mémoire externe audit circuit, comprenant les étapes consistant à :
- sélectionner une clé secrète, à partir d'une liste de clés secrètes respectivement stockées dans un ensemble de registres du circuit chacune étant en association avec un identificateur de clé, au moins l'une desdites clés étant une clé partagée avec au moins un autre circuit de l'appareil électronique ;
- découper les données en un flux de mots de données de taille déterminée ;
   et, en continu pour chaque mot de données,
- générer un nombre pseudo aléatoire de taille déterminée au moyen d'un générateur pseudo aléatoire mettant en oeuvre un algorithme de génération en fonction de ladite clé secrète et d'un vecteur d'initialisation changeant de valeur à chaque mot de données ;
- combiner le mot de données et le nombre pseudo aléatoire correspondant, pour générer un mot de données chiffré ; puis,
- stocker dans ladite mémoire externe chaque mot de données chiffré en association avec le vecteur d'initialisation et l'identificateur de clé associé à la clé secrète ayant servi à le chiffrer.

Un deuxième aspect de l'invention prévoit un procédé de déchiffrement, dans un circuit d'un appareil électronique, de données stockées sous la forme de mots de données chiffrés dans une mémoire externe audit circuit, comprenant les étapes consistant à :
- lire dans ladite mémoire externe un mot de données chiffrés ainsi qu'un vecteur d'initialisation et qu'un identificateur de clé secrète respectivement associés audit mot de données ;
- sélectionner une clé secrète, à partir d'une liste de clés secrètes respectivement stockées dans un ensemble de registres du circuit et dont l'une au moins est une clé partagée avec au moins un autre circuit de l'appareil électronique, et à partir en outre dudit identificateur ;
   et, en continu pour chaque mot de données chiffré,
- générer un nombre pseudo aléatoire de taille déterminée au moyen d'un générateur pseudo aléatoire mettant en oeuvre un algorithme de génération en fonction de ladite clé secrète et dudit vecteur d'initialisation ; et
- combiner le mot de données et le nombre pseudo aléatoire correspondant, pour générer un mot de données déchiffré.

Un troisième aspect de l'invention se rapporte à un dispositif pour la mise en oeuvre d'un procédé de chiffrement selon le premier aspect, comprenant :
- un ensemble des registres stockant des clés secrètes respectives, dont l'une au moins est une clé partagée avec un autre circuit de l'appareil électronique, chacune étant en association avec un identificateur de clé ;
- une unité de sélection de clés secrètes adaptée pour sélectionner une clé secrète à partir de la liste des clés stockées dans ledit ensemble de registres ;
- une unité de segmentation adaptée pour découper les données de manière à former un flux de mots de données de taille déterminée ;
- un générateur de vecteur d'initialisation adapté pour générer un flux de vecteurs d'initialisation changeant de valeur à chaque mot de données ;
- un générateur de nombres pseudo aléatoires mettant en oeuvre un algorithme de génération adapté pour générer, pour chaque mot de données, en fonction de ladite clé secrète et d'un déterminé desdits vecteurs d'initialisation, un nombre pseudo aléatoire de taille déterminée ;
- une unité de combinaison adaptée pour combiner en continu le mot de données et le nombre pseudo aléatoire correspondant, pour générer un mot de données chiffré ; et,
- des moyens pour stocker dans ladite mémoire externe chaque mot de données chiffré en association avec ledit vecteur d'initialisation déterminé et l'identificateur de clé associé à la clé secrète ayant servi à le chiffrer.

De plus, selon un quatrième aspect, l'invention propose un dispositif pour la mise en oeuvre d'un procédé de déchiffrement selon le deuxième aspect. Ce dispositif comprend:
- un ensemble de registres stockant des clés secrètes respectives dont l'une au moins est une clé partagée, chacune étant en association avec un identificateur de clé ;
- des moyens de lecture pour lire dans ladite mémoire externe un mot de données ainsi qu'un vecteur d'initialisation et qu'un identificateur d'une clé secrète respectivement associés audit mot de données ;
- des moyens de sélection pour sélectionner, pour chaque mot de données, une clé secrète à partir d'une liste de clés stockées dans lesdits registres et à partir en outre dudit identificateur de clé ;
- un générateur de nombres pseudo aléatoires mettant en oeuvre un algorithme de génération adapté pour générer, pour chaque mot de données, en fonction de ladite clé secrète et dudit vecteur d'initialisation, un nombre pseudo aléatoire de taille déterminée ; et,
- une unité de combinaison adaptée pour combiner le mot de données et le nombre pseudo aléatoire correspondant, de manière à déchiffrer ledit mot de données.

Un cinquième aspect de l'invention concerne un circuit comprenant une unité de chiffrement/déchiffrement formant dispositif de chiffrement selon le troisième aspect et dispositif de déchiffrement selon le quatrième aspect. L'ensemble de registres, le générateur de nombres pseudo aléatoires et l'unité de combinaison sont alors communs aux deux dispositifs.

Selon un sixième et dernier aspect, l'invention propose encore un appareil électronique comprenant au moins deux circuits selon le cinquième aspect, dans lequel au moins l'une des clés secrètes est partagée entre lesdits circuits de manière à former un sous-système sécurisé.

Les clés sont dites partagées en ce sens que d'autres circuits de l'appareil électronique les connaissent, par exemple les circuits appartenant à la zone sécurisée, c'est-à-dire au sous-système sécurisé. L'invention offre ainsi une solution qui permet d'individualiser le chiffrement selon le processeur qui le réalise, tout en assurant que tous les processeurs ayant l'autorisation d'utiliser les données stockées dans la mémoire externe pourront les déchiffrer.

Le chiffrement selon l'invention est du type d'un chiffrement en continu ("Stream Cipher"), qui est plus simple et donc plus rapide qu'un chiffrement par blocs. Un chiffrement en continu est en outre insensible aux attaques par dictionnaire, car le même mot de données est chiffré en un mot différent à chaque chiffrement.

De plus, le chiffrement selon l'invention est compatible avec un accès aléatoire à la mémoire externe.

D'autres caractéristiques et avantages de l'invention apparaîtront encore à la lecture de la description qui va suivre. Celle-ci est purement illustrative et doit être lue en regard des dessins annexés sur lesquels :
- la figure 1 est un schéma d'un appareil électronique auquel peuvent s'appliquer les différents aspects de l'invention ;
- la figure 2 est un schéma fonctionnel d'un exemple de circuit couplé à une mémoire externe, selon un mode de réalisation d'un circuit selon l'invention.

Sur les dessins, les mêmes éléments sont désignés par les mêmes références aux différentes figures. Pour des raisons de clarté, seules les étapes du procédé et les éléments qui sont nécessaires à la compréhension de l'invention ont été représentés et sont décrits dans la suite. En particulier, tous les éléments d'un circuit n'ont pas été détaillés, l'invention exploitant des composants connus pour sa mise en oeuvre.

Une caractéristique de la présente invention est de chiffrer des données (programmes, données binaires quelconques) devant être stockées dans une mémoire externe partagée par plusieurs circuits d'un appareil électronique. Les données sont chiffrées au moyen d'une clé secrète, propre au circuit réalisant le chiffrement, qui peut être différente de la clé secrète utilisée par d'autres circuits pour un chiffrement comparable.

Afin de permettre l'utilisation des données chiffrées par plus d'un circuit, certaines au moins des clés secrètes susceptibles d'être utilisées par un circuit sont partagées avec un ou des autres circuits, c'est-à-dire qu'elle sont connues de ces circuits tout en étant secrètes vis-à-vis du reste du système. Une clé partagée définit un sous-système de circuits pouvant utiliser des données communes stockées dans la mémoire externe. Typiquement, ce sous-système peut correspondre à une zone sécurisée telle que présentée en introduction en regard du schéma de la figure 1.

De plus, les données sont stockées dans la mémoire externe en association avec un identificateur de la clé secrète ayant servi à les chiffrer. Cet identificateur permet aux circuits autorisés de déterminer la clé secrète à utiliser pour le déchiffrement des données. Cet identificateur peut correspondre à un index dans un ensemble de registres internes dans lesquels les clés secrètes supportées par un circuit sont respectivement stockées. Ce n'est donc pas la clé secrète elle-même qui est stockée avec les données chiffrées par elle, mais l'identificateur de cette clé secrète. La divulgation de l'identificateur par stockage dans la mémoire externe n'apporte aucune faiblesse de chiffrement, puisque seuls les circuits autorisés peuvent connaître la clé secrète à utiliser à partir de cet identificateur.

Une autre caractéristique de la présente invention est de prévoir un chiffrement et un déchiffrement en continu, lors des transferts entre un circuit et la mémoire externe. Ce chiffrement continu est obtenu à partir d'un découpage des données en mots de taille déterminée qui sont ensuite stockés sous forme chiffrée dans la mémoire externe. On prévoit également que le chiffrement utilise la combinaison d'un mot de données avec un nombre pseudo aléatoire, lequel est généré à partir de la clé secrète et d'un vecteur d'initialisation.

Avantageusement, le vecteur d'initialisation change de valeur pour chaque mot, de préférence de façon aléatoire, afin de renforcer la sécurité du chiffrement. Le vecteur d'initialisation ayant servi au chiffrement d'un mot de données est avantageusement stocké dans la mémoire externe en association avec le mot de données chiffré, de même que l'identificateur de la clé secrète comme indiqué ci-dessus. On s'affranchit ainsi des problèmes liés au chiffrement en continu qui sont classiquement incompatibles avec les accès directs aléatoires à une mémoire.

Le schéma de la figure 2 montre les moyens essentiels d'un exemple de réalisation d'un circuit convenant pour la mise en oeuvre du procédé de chiffrement (illustrée par les flèches en traits pleins) et pour la mise en oeuvre du procédé de déchiffrement (illustrée par les flèches en traits pointillés).

Le circuit est ici un processeur 2 (CPU) comprenant un coeur de processeur 44 (CORE), des mémoires cache 33 et 34 (CACHE), une unité 31 (KSEL) de sélection de clé de chiffrement (K), et une unité 38 (BEU) de chiffrement/déchiffrement.

L'unité 38 comprend une unité 22 (SEGM) de segmentation de données, un ensemble 32 (KREG) de registres de clés secrètes, un premier générateur pseudo aléatoire 24 (IVGEN), une mémoire cache 25 (IVCACHE), un registre de clé de chiffrement 12 et un registre de vecteur d'initialisation 13, un second générateur pseudo aléatoire 10 (PRNG), et enfin une unité de combinaison 11.

L'unité de segmentation 22 a pour fonction de segmenter les données à chiffrer (DATA) qu'elle reçoit du coeur de processeur 44, en mots de données (W) de taille déterminée. Un mot de données peut ainsi comprendre un seul bit. De préférence, toutefois, la taille d'un mot est égale à un octet, c'est-à-dire qu'un mot comprend huit bits.

Chaque registre de l'ensemble 32 est adapté pour stocker de manière non volatile une clé secrète (K) à laquelle est associé un identificateur de clé secrète (KID). Tout ou partie des clés secrètes peut être fournie au processeur via un canal sécurisé, par exemple lors de la fabrication du système. Certaines au moins des clés secrètes peuvent, à l'inverse, être générées en interne selon un algorithme ad-hoc dont la description sortirait du cadre du présent exposé. Dans un exemple préféré pour sa simplicité, l'identificateur est un index, tel qu'un numéro de registre, permettant d'accéder à la clé secrète correspondante parmi la liste de clés secrètes supportées par le processeur et stockées dans l'ensemble 32.

Le générateur aléatoire 24 est adapté pour générer des vecteurs d'initialisation, au rythme d'un vecteur d'initialisation par mot de données à chiffrer, selon un algorithme pseudo aléatoire quelconque.

La mémoire cache 25 est adaptée pour stocker des paires formées chacune d'un vecteur d'initialisation et d'un identificateur de clé associés à un mot de données.

Le registre 12 est adapté pour stocker une clé de chiffrement, à savoir l'une des clés secrètes stockées dans l'ensemble de registres 32. Ce registre est indiqué ici pour la clarté de l'exposé, mais il peut être omis si l'on prévoit des moyens de gestion de l'ensemble de registres 32 adaptés.

Le registre 13 de vecteur d'initialisation a pour fonction de stocker le vecteur d'initialisation généré en continu par le générateur pseudo aléatoire 24. De préférence, la taille des vecteurs d'initialisation est égale à la taille des mots de données à chiffrer.

Le rôle du générateur pseudo aléatoire 10 est de générer en continu un flux de nombres pseudo aléatoires (PN), à raison d'un tel nombre par mot de données à chiffrer. Chaque nombre pseudo aléatoire est généré à partir de la clé de chiffrement stockée dans le registre 12 et du vecteur d'initialisation stocké dans le registre 13, ce dernier changeant de valeur à chaque mot de données.

Dans un exemple, l'unité de combinaison est une porte OU-Exclusif (XOR). Le générateur pseudo aléatoire 10 et une porte XOR forment un cryptosystème qui, en soi, est bien connu de l'Homme du métier. Les mots de données chiffrés qu'il délivre en sortie ont la même taille que les mots de données (avant chiffrement) reçus en entrée. Un tel cryptosystème présente l'avantage de fournir un algorithme de chiffrement simple, donc rapide, et dont la robustesse vis-à-vis des attaques de sécurité est déterminée par les détails internes du générateur pseudo aléatoire 10. Plus le flux de nombre PN généré par ce dernier est aléatoire, meilleure est la sécurité de l'algorithme de chiffrement. Un autre avantage d'un algorithme de chiffrement par porte XOR est que le déchiffrement s'effectue de la même façon que le chiffrement, ce qui simplifie la conception matérielle du cryptosystème.

Le fonctionnement du circuit en mode chiffrement, va maintenant être expliqué, en considérant les flèches en traits pleins représentés à la figure 2.

Le mode chiffrement est typiquement activé par le coeur de processeur 44 lorsque des données DATA stockées dans, ou transitant par la mémoire cache 34 doivent être écrites dans la mémoire externe 23, et doivent à cet effet transiter via le bus de communication 3.

Le coeur 44 commande l'unité de sélection 31 de manière à sélectionner l'une des clés secrètes stockées dans l'ensemble de registre 32. Dans un exemple, l'unité 31 sélectionne un identificateur de clé secrète KIDi associé à une clé secrète déterminée. Cet identificateur KIDi est fourni par l'unité 31 à l'unité de chiffrement 38.

Dans l'unité de chiffrement 38, la clé Ki associée à l'identificateur KIDi est lue dans l'ensemble de registre 32 à l'aide dudit identificateur KIDi, utilisé par exemple comme index dans le parcours de l'ensemble de registres 32. La clé Ki est alors stockée dans le registre 12.

Par ailleurs, le coeur 44 commande la mémoire cache 34 de manière que les données DATA sont fournies à l'unité de chiffrement 38, et plus particulièrement en entrée de l'unité de segmentation 22. Cette dernière délivre un flux de mots binaires Wi correspondant chacun à un segment du flux de données DATA. Parallèlement, le générateur pseudo aléatoire 24 génère un flux de vecteurs d'initialisation IVi, au rythme de la délivrance des mots de données Wi par l'unité 22, ces vecteurs d'initialisation changeant de valeur à chacun des mots Wi. Dit autrement, à chaque mot de données Wi est associé un vecteur d'initialisation IVi dont la valeur est différente de celle du vecteur d'initialisation associée au mot précédent dans le flux de mot de données. Les vecteurs d'initialisation IVi, qui sont générés en continu, sont à chaque fois stockés dans le registre 13.

Pour chaque mot de données Wi, les opérations suivantes sont alors effectuées en continu.

D'une part, le générateur pseudo aléatoire 10 génère un nombre pseudo aléatoire PNi en fonction de la clé secrète Ki stockée dans le registre 12 et du vecteur d'initialisation IVi stocké dans le registre 13. A chaque fois, le nombre PNi est délivré sur une seconde entrée de la porte XOR 11.

D'autre part, le mot de données Wi et le nombre pseudo aléatoire PNi correspondant sont combinés par la porte XOR 11, de manière à générer un mot de données chiffré Ci.

L'unité de chiffrement 38 stocke alors le mot Ci dans la mémoire externe 23, ainsi que et en association avec le vecteur d'initialisation IVi, et l'identificateur de clé secrète KIDi qui ont servi à le chiffrer. Pour cette écriture, le mot de données chiffré Ci, le vecteur d'initialisation IVi et l'identificateur de clé secrète KIDi transitent par l'intermédiaire du bus de communication 3. Ceci n'est toutefois pas une faiblesse de sécurité du procédé de chiffrement, dans la mesure où le mot Ci est chiffré, où le vecteur d'initialisation IVi ne suffit pas à lui seul pour réaliser le déchiffrement, et où l'identificateur KIDi n'a aucune signification pour un autre circuit qui ne dispose pas de la clé secrète associée à cet identificateur.

Le fonctionnement du circuit en mode déchiffrement est maintenant exposé en considérant les flèches en traits pointillés représentés à la figure 2.

Sous la commande du coeur de processeur 44, des mots de données chiffrés sont lus dans la mémoire externe 23 à des adresses déterminées. Chaque mot Cj ainsi lu est délivré sur la première entrée de la porte XOR 11. Pour chaque mot Cj, le vecteur d'initialisation IVj et l'identificateur de clé secrète KIDj qui sont associés à ce mot, sont également lus dans la mémoire externe 23.

A partir de l'identificateur KIDj, l'unité de déchiffrement 38 sélectionne la clé secrète Kj associée à cet identificateur, en cherchant dans la liste des clés secrètes stockées dans l'ensemble de registres 32. La clé Kj ainsi sélectionnée est stockée dans le registre 12. Parallèlement, le vecteur IVj est stocké dans le registre 13.

En fait, le vecteur IVj et l'identificateur KIDj transitent par la mémoire cache 25. Cette mise en mémoire cache permet d'améliorer les performances de l'unité de déchiffrement, en terme de vitesse de déchiffrement. Le générateur pseudo aléatoire 10 génère alors un nombre pseudo aléatoire PNj à partir de la clé Kj stockée dans le registre 12 et du vecteur IVj stocké dans le registre 13. Le nombre PNj est délivré sur la seconde entrée de la porte XOR 11.

La porte XOR 11 combine le mot de données chiffrées Cj et le nombre pseudo aléatoire PNj et délivre en sortie un mot de donnée Wj correspondant au mot Cj déchiffré.

Le mot de données déchiffré Wj est alors fourni au coeur de processeur 44 à travers la mémoire cache 33.

Bien entendu, la présente invention est susceptible de diverses variantes et modifications qui apparaîtront à l'Homme du métier. En particulier, l'invention pourra être mise en oeuvre avec n'importe quel algorithme de chiffrement continu connu, conditionnant le générateur pseudo aléatoire 10 à partir de la clé secrète et des vecteurs d'initialisation. De plus, on suppose que la réalisation pratique de l'invention est à la portée de l'Homme du métier à partir des indications fonctionnelles données plus haut. A cet égard, on notera que, selon un mode de réalisation de l'invention décrit ici, les différents outils de chiffrement et de déchiffrement sont réalisés par des ressources matérielles du processeur. Toutefois, une mise en oeuvre par des ressources logicielles est bien entendu envisageable.

En outre, l'invention ne se limite en aucune manière à une application dans un processeur. Bien au contraire, une unité de chiffrement/déchiffrement telle que l'unité 38 décrite plus haut peut être prévue dans d'autres circuits d'un appareil électronique tel que représenté à la figure 1, notamment dans le contrôleur de disque ou dans la carte réseau.

On notera également que la totalité des données stockées dans la mémoire externe ne doit pas forcément être chiffrée. A cet égard, on peut prévoir qu'un identificateur de clé ayant la valeur nulle correspond à l'absence de chiffrement du mot de données correspondant, c'est-à-dire que ledit mot de données est stocké en clair dans la mémoire externe.

## Revendications

1. Procédé de chiffrement dans un circuit (2) d'un appareil électronique, de données à stocker dans une mémoire (23) externe audit circuit, comprenant les étapes consistant à :
- sélectionner une clé secrète (Ki), à partir d'une liste de clés secrètes (K) respectivement stockées dans un ensemble de registres (32) du circuit chacune étant en association avec un identificateur de clé (KID), au moins l'une desdites clés étant une clé partagée avec au moins un autre circuit de l'appareil électronique ;
- découper les données en un flux de mots de données (Wi) de taille déterminée ;
et, en continu pour chaque mot de données,
- générer un nombre pseudo aléatoire (PNi) de taille déterminée au moyen d'un générateur pseudo aléatoire mettant en oeuvre un algorithme de génération en fonction de ladite clé secrète et d'un vecteur d'initialisation (IVi) changeant de valeur à chaque mot de données ;
- combiner le mot de données et le nombre pseudo aléatoire correspondant, pour générer un mot de données chiffré (Ci) ; puis,
- stocker dans ladite mémoire externe chaque mot de données chiffré en association avec le vecteur d'initialisation et l'identificateur de clé (KIDi) associé à la clé secrète ayant servi à le chiffrer.

2. Procédé selon la revendication 1, suivant lequel la combinaison est du type OU-Exclusif, la taille des nombres pseudo aléatoires étant égale à la taille des mots de données.

3. Procédé selon l'une quelconque des revendications précédentes, suivant lequel au moins l'une des clés secrètes est propre au circuit.

4. Procédé de déchiffrement, dans un circuit (2) d'un appareil électronique, de données stockées sous la forme de mots de données chiffrés dans une mémoire (23) externe audit circuit, comprenant les étapes consistant à :
- lire dans ladite mémoire externe un mot de données chiffrés (Cj) ainsi qu'un vecteur d'initialisation (IVj) et qu'un identificateur de clé secrète (KIDj) respectivement associés audit mot de données ;
- sélectionner une clé secrète (Kj), à partir d'une liste de clés secrètes (K) respectivement stockées dans un ensemble de registres (32) du circuit et dont l'une au moins est une clé partagée avec au moins un autre circuit de l'appareil électronique, et à partir en outre dudit identificateur ;
et, en continu pour chaque mot de données chiffré,
- générer un nombre pseudo aléatoire (PNj) de taille déterminée, au moyen d'un générateur pseudo aléatoire (10) mettant en oeuvre un algorithme de génération en fonction de ladite clé secrète et dudit vecteur d'initialisation ; et,
- combiner le mot de données et le nombre pseudo aléatoire correspondant, pour générer un mot de données déchiffré (Wj).

5. Procédé selon la revendication 4, suivant lequel la combinaison est du type OU-Exclusif, la taille des nombres pseudo aléatoires étant égale à la taille des mots de données.

6. Procédé selon l'une quelconque des revendications 4 et 5, suivant lequel le vecteur d'initialisation et l'identificateur de clé secrète lus dans la mémoire externe, sont stockés en association l'un avec l'autre dans une mémoire cache (25) du circuit.

7. Dispositif pour la mise en oeuvre d'un procédé de chiffrement selon l'une quelconque des revendications 1 à 3, comprenant :
- un ensemble des registres (32) stockant des clés secrètes (K) respectives, dont l'une au moins est une clé partagée avec un autre circuit de l'appareil électronique, chacune étant en association avec un identificateur de clé (KID) ;
- une unité de sélection de clés secrètes adaptée pour sélectionner une clé secrète (Ki) à partir de la liste des clés stockées dans ledit ensemble de registres ;
- une unité de segmentation (22) adaptée pour découper les données de manière à former un flux de mots de données (Wi) de taille déterminée ;
- un générateur de vecteurs d'initialisation (24) adapté pour générer un flux de vecteurs d'initialisation (IVi) changeant de valeur à chaque mot de données;
- un générateur de nombres pseudo aléatoires (10) mettant en oeuvre un algorithme de génération adapté pour générer, pour chaque mot de données, en fonction de ladite clé secrète et d'un déterminé desdits vecteurs d'initialisation, un nombre pseudo aléatoire (PNi) de taille déterminée ;
- une unité de combinaison (11) adaptée pour combiner en continu le mot de données et le nombre pseudo aléatoire correspondant, pour générer un mot de données chiffré (Ci) ; et,
- des moyens pour stocker dans ladite mémoire externe chaque mot de données chiffré en association avec ledit vecteur d'initialisation déterminé et l'identificateur de clé associé à la clé secrète ayant servi à le chiffrer.

8. Dispositif pour la mise en oeuvre d'un procédé de déchiffrement selon l'une quelconque des revendications 4 à 6, comprenant:
- un ensemble de registres stockant des clés secrètes respectives dont l'une au moins est une clé partagée, chacune étant en association avec un identificateur de clé ;
- des moyens de lecture pour lire dans ladite mémoire externe un mot de données ainsi qu'un vecteur d'initialisation et qu'un identificateur d'une clé secrète respectivement associés audit mot de données ;
- des moyens de sélection pour sélectionner, pour chaque mot de données, une clé secrète à partir d'une liste de clés stockées dans lesdits registres et à partir en outre dudit identificateur de clé ;
- un générateur de nombres pseudo aléatoires (10) mettant en oeuvre un algorithme de génération adapté pour générer, pour chaque mot de données, en fonction de ladite clé secrète et dudit vecteur d'initialisation, un nombre pseudo aléatoire de taille déterminée ; et,
- une unité de combinaison adaptée pour combiner le mot de données et le nombre pseudo aléatoire correspondant, de manière à déchiffrer ledit mot de données.

9. Circuit comprenant une unité de chiffrement/déchiffrement (38) formant dispositif de chiffrement selon la revendication 7 et dispositif de déchiffrement selon la revendication 8, l'ensemble de registres, le générateur de nombres pseudo aléatoires et l'unité de combinaison étant communs aux deux dispositifs.

10. Circuit selon la revendication 9, dans lequel l'unité de combinaison est une porte OU-Exclusif, la taille des nombres pseudo aléatoires étant égale à la taille des mots de données.

11. Circuit selon l'une quelconque des revendications 9 et 10, dans lequel au moins l'une des clés secrètes est propre au circuit.

12. Circuit selon l'une quelconque des revendications 9 à 11, dans lequel au moins l'une des clés secrètes est partagée avec un autre circuit d'un appareil électronique.

13. Circuit selon l'une quelconque des revendications 9 à 12, dans lequel l'unité de chiffrement/déchiffrement comprend une mémoire cache (25) dans laquelle le vecteur d'initialisation et l'identificateur de clé secrète lus dans la mémoire externe sont stockés en association l'un avec l'autre.

14. Appareil électronique comprenant au moins deux circuits selon l'une quelconque des revendications 9 à 13, dans lequel au moins l'une des clés secrètes est partagée entre lesdits circuits de manière à former un sous-système sécurisé.

## Claims

1. Method of encryption in a circuit (2) of an electronic apparatus, of data to be stored in a memory (23) external to the said circuit, comprising the steps consisting in:
- selecting a secret key (Ki), from a list of secret keys (K) respectively stored in a set of registers (32) of the circuit each being in association with a key identifier (KID), at least one of the said keys being a key shared with at least one other circuit of the electronic apparatus;
- segmenting the data into a stream of data words (Wi) of determined size;
and, continuously for each data word,
- generating a pseudorandom number (PNi) of determined size by means of a pseudorandom generator implementing a generating algorithm based on the said secret key and on an initialization vector (IVi) changing value with each data word;
- combining the data word and the corresponding pseudorandom number, so as to generate an encrypted data word (Ci); then,
- storing in said external memory each data word encrypted in association with the initialization vector and the key identifier (KIDi) associated with the secret key that has served to encrypt same.

2. Method according to Claim 1, wherein the combination is of the Exclusive-OR type, the size of the pseudorandom numbers being equal to the size of the data words.

3. Method according to any one of the preceding claims, wherein at least one of the secret keys is individual to the circuit.

4. Method of decryption, in a circuit (2) of an electronic apparatus, of data stored in the form of data words encrypted in a memory (23) external to the said circuit, comprising the steps of:
- reading from said external memory an encrypted data word (Cj) together with an initialization vector (IVj) and with a secret-key identifier (KIDj) which are respectively associated with said data word;
- selecting a secret key (Kj), on the basis of a list of secret keys (K) respectively stored in a set of registers (32) of the circuit and at least one of which is a key shared with at least one other circuit of the electronic apparatus, and on the basis moreover of said identifier;
and, continuously for each encrypted data word,
- generating a pseudorandom number (PNj) of determined size, by means of a pseudorandom generator (10) implementing a generating algorithm based on said secret key and on said initialization vector; and,
- combining the data word and the corresponding pseudorandom number, to generate a decrypted data word (Wj).

5. Method according to Claim 4, wherein the combination is of the Exclusive-OR type, the size of the pseudorandom numbers being equal to the size of the data words.

6. Method according to either of Claims 4 and 5, wherein the initialization vector and the secret-key identifier that are read from the external memory are stored in association with one another in a cache memory (25) of the circuit.

7. Device for the implementation of a method of encryption according to any one of Claims 1 to 3, comprising:
- a set of registers (32) storing respective secret keys (K), one at least of which is a key shared with another circuit of the electronic apparatus, each being in association with a key identifier (KID);
- a unit for selecting secret keys that is suitable for selecting a secret key (Ki) from the list of keys stored in the said set of registers;
- a segmentation unit (22) suitable for segmenting the data in such a way as to form a stream of data words (Wi) of determined size;
- a generator of initialization vectors (24) which is suitable for generating a stream of initialization vectors (IVi) changing value with each data word;
- a generator of pseudorandom numbers (10) implementing a generating algorithm suitable for generating, for each data word, based on said secret key and on a determined one of the said initialization vectors, a pseudorandom number (PNi) of determined size;
- a combination unit (11) suitable for continuously combining the data word and the corresponding pseudorandom number, so as to generate an encrypted data word (Ci); and,
- means for storing in said external memory each data word encrypted in association with the said determined initialization vector and the key identifier associated with the secret key that has served to encrypt same.

8. Device for the implementation of a method of decryption according to any one of Claims 4 to 6, comprising:
- a set of registers storing respective secret keys at least one of which is a shared key, each being in association with a key identifier;
- reading means for reading from the said external memory a data word together with an initialization vector and with an identifier of a secret key which are respectively associated with said data word;
- selection means for selecting, for each data word, a secret key on the basis of a list of keys stored in said registers and on the basis further of the key identifier;
- a generator of pseudorandom numbers (10) implementing a generating algorithm suitable for generating, for each data word, on the basis of said secret key and of said initialization vector, a pseudorandom number of determined size; and
- a combination unit suitable for combining the data word and the corresponding pseudorandom number, in such a way as to decrypt said data word.

9. Circuit comprising an encryption/decryption unit (38) forming an encryption device according to Claim 7 and a decryption device according to Claim 8, the set of registers, the pseudorandom number generator and the combination unit being common to the two devices.

10. Circuit according to Claim 9, wherein the combination unit is an Exclusive-OR gate, the size of the pseudorandom numbers being equal to the size of the data words.

11. Circuit according to any one of Claims 9 and 10, wherein at least one of the secret keys is individual to the circuit.

12. Circuit according to any one of Claims 9 to 11, wherein at least one of the secret keys is shared with another circuit of an electronic apparatus.

13. Circuit according to any one of Claims 9 to 12, wherein the encryption/decryption unit comprises a cache memory (25) in which the initialization vector and the secret-key identifier that are read from the external memory are stored in association with one another.

14. Electronic apparatus comprising at least two circuits according to any one of Claims 9 to 13, wherein at least one of the secret keys is shared between said circuits in such a way as to form a secure subsystem.

## Patentansprüche

1. Verfahren zum Verschlüsseln in einem Schaltkreis (2) eines elektronischen Geräts von Daten, die in einem Speicher (23) zu speichern sind, der außerhalb des Schaltkreises ist, das die Schritte umfasst, die in Folgendem bestehen:
- Auswählen eines geheimen Schlüssels (Ki) ausgehend von einer Liste Geheimschlüssel (K), die jeweils in einer Einheit von Registern (32) des Schaltkreises gespeichert sind, wobei jeder mit einem Schlüsselidentifikator (KID) verbunden ist, wobei mindestens einer der Schlüssel ein Schlüssel ist, der mit mindestens einem anderen Schaltkreis des elektronischen Geräts geteilt wird,
- Unterteilen der Daten in einen Strom von Datenwörtern (Wi) mit festgelegter Größe,
und schließlich für jedes Datenwort
- Erzeugen einer pseudozufälligen Zahl (PNi) mit festgelegter Größe mittels eines Pseudozufallsgenerators, der einen Algorithmus zum Erzeugen in Abhängigkeit von dem geheimen Schlüssel und einem Initialisierungsvektor (IVi), der bei jedem Datenwort den Wert wechselt, umsetzt,
- Kombinieren des Datenworts und der entsprechenden Pseudozufallszahl, um ein verschlüsseltes Datenwort (Ci) zu erzeugen, dann
- Speichern jedes verschlüsselten Datenworts im externen Speicher verbunden mit dem Initialisierungsvektor und dem Schlüsselidentifikator (KIDi) verbunden mit dem geheimen Schlüssel, der dazu gedient hat, ihn zu verschlüsseln.

2. Verfahren nach Anspruch 1, bei dem die Kombination des Typs ODER-Exklusiv ist, wobei die Größe der Pseudozufallszahlen gleich der Größe der Datenwörter ist.

3. Verfahren nach einem der vorhergehenden Ansprüche, bei dem mindestens einer der geheimen Schlüssel dem Schaltkreis eigen ist.

4. Verfahren zum Entschlüsseln in einem Schaltkreis (2) eines elektronischen Geräts von Daten, die in Form von verschlüsselten Datenwörtern in einem Speicher (23) außerhalb des Schaltkreises gespeichert sind, die Schritte umfassend, die in Folgendem bestehen:
- aus dem externen Speicher Lesen eines verschlüsselten Datenworts (Cj) sowie eines Initialisierungsvektors (IVj) und eines Identifikators eines geheimen Schlüssels (KIDj), die jeweils mit dem Datenwort verbunden sind,
- Auswählen eines geheimen Schlüssels (Kj) ausgehend von einer Liste geheimer Schlüssel (K), die in einer Einheit von Registern (32) des Schaltkreises gespeichert sind und von welchen mindestens einer ein Schlüssel ist, der mit mindestens einem anderen Schaltkreis des elektronischen Geräts geteilt wird, und ferner ausgehend von dem Identifikator,
und kontinuierlich für jedes verschlüsselte Datenwort
- Erzeugen einer Pseudozufallszahl (PNj) mit festgelegter Größe mittels eines Pseudozufallsgenerators (10), der einen Algorithmus zum Erzeugen in Abhängigkeit von dem geheimen Schlüssel und dem Initialisierungsvektor umsetzt, und
- Kombinieren des Datenworts und der entsprechenden Pseudozufallszahl, um ein entschlüsseltes Datenwort (Wj) zu erzeugen.

5. Verfahren nach Anspruch 4, bei dem die Kombination des Typs ODER-Exklusiv ist, wobei die Größe der Pseudozufallszahlen gleich der Größe der Datenwörter ist.

6. Verfahren nach einem der Ansprüche 4 und 5, bei dem der Initialisierungsvektor und der Identifikator des geheimen Schlüssels, die aus dem externen Speicher gelesen werden, miteinander verbunden in einem Cache-Speicher (25) des Schaltkreises gespeichert sind.

7. Vorrichtung zum Umsetzen eines Verschlüsselungsverfahrens nach einem der Ansprüche 1 bis 3, umfassend:
- eine Einheit der Register (32), die die geheimen Schlüssel (K) speichern, von welchen mindestens einer ein mit einem anderen Schaltkreis des elektronischen Geräts geteilter Schlüssel ist, wobei jeder mit einem Schlüsselidentifikator (KID) verbunden ist,
- eine Einheit zum Auswählen von geheimen Schlüsseln, die einen geheimen Schlüssel (Ki) ausgehend von der Liste der Schlüssel, die in der Registereinheit gespeichert sind, auswählen kann,
- eine Segmentierungseinheit (22), die die Daten so aufteilen kann, dass ein Strom von Datenwörtern (Wi) mit festgelegter Größe gebildet wird,
- einen Generator von Initialisierungsvektoren (24), der einen Strom von Initialisierungsvektoren (IVi) erzeugen kann, der den Wert bei jedem Datenwort wechselt,
- ein Generator für Pseudozufallszahlen (10), der einen Erzeugungsalgorithmus umsetzt, der für jedes Datenwort in Abhängigkeit von dem geheimen Schlüssel und einem bestimmten der Initialisierungsvektoren eine Pseudozufallszahl (PNi) mit bestimmter Größe erzeugen kann,
- eine Kombinationseinheit (11), die das Datenwort und die entsprechende Pseudozufallszahl kontinuierlich kombinieren kann, um ein verschlüsseltes Datenwort (Ci) zu erzeugen, und
- Mittel zum Speichern in dem externen Speicher jedes verschlüsselten Datenworts verbunden mit dem festgelegten Initialisierungsvektor und dem Schlüsselidentifikator, der mit dem geheimen Schlüssel verbunden ist, der dazu gedient hat, ihn zu verschlüsseln.

8. Vorrichtung zum Umsetzen eines Entschlüsselungsverfahrens nach einem der Ansprüche 4 bis 6, umfassend:
- eine Einheit von Registern, die jeweilige Schlüssel speichern, von welchen mindestens einer ein geteilter Schlüssel ist, wobei jeder mit einem Schlüsselidentifikator verbunden ist,
- Lesemittel zum Lesen in dem externen Speicher eines Datenworts sowie eines Initialisierungsvektors und eines Identifikators eines jeweiligen mit dem Datenwort verbundenen geheimen Schlüssels,
- Auswahlmittel zum Auswählen für jedes Datenwort eines geheimen Schlüssels ausgehend von einer Liste von Schlüsseln, die in den Registern gespeichert sind und ausgehend ferner von dem Schlüsselidentifikator,
- einen Generator für Pseudozufallszahlen (10), der einen Erzeugungsalgorithmus umsetzt, der für jedes Datenwort in Abhängigkeit von dem geheimen Schlüssel und dem Initialisierungsvektor eine Pseudozufallszahl mit bestimmter Größe erzeugen kann, und
- eine Kombinationseinheit, die das Datenwort und die entsprechende Pseudozufallszahl so kombinieren kann, dass das verschlüsselte Datenwort entschlüsselt wird.

9. Schaltkreis umfassend eine Verschlüsselungs-/Entschlüsselungseinheit (38), die eine Verschlüsselungsvorrichtung nach Anspruch 7 und Entschlüsselungsvorrichtung nach Anspruch 8 bildet, wobei die Einheit von Registern, der Generator für Pseudozufallswörter und die Kombinationseinheit für die zwei Vorrichtungen gemeinsam sind.

10. Schaltkreis nach Anspruch 9, bei dem die Kombinationseinheit ein ODER-Exklusiv-Gatter ist, wobei die Größe der Pseudozufallszahlen gleich der Größe der Datenwörter ist.

11. Schaltkreis nach einem der Ansprüche 9 und 10, bei dem mindestens einer der geheimen Schlüssel dem Schaltkreis eigen ist.

12. Schaltkreis nach einem der Ansprüche 9 bis 11, bei dem mindestens einer der geheimen Schlüssel mit einem anderen Schaltkreis eines elektronischen Geräts geteilt wird.

13. Schaltkreis nach einem der Ansprüche 9 bis 12, bei dem die verschlüsselungs-/Entschlüsselungseinheit einen Cache-Speicher (25) umfasst, in dem der Initialisierungsvektor und der Identifikator für geheimen Schlüssel, die in dem externen Speicher gelesen werden, miteinander verbunden gespeichert werden.

14. Elektronisches Gerät, das mindestens zwei Schaltkreise gemäß einem der Ansprüche 9 bis 13 enthält, bei dem mindestens einer der geheimen Schlüssel zwischen den Schaltkreisen geteilt ist, so dass ein gesichertes Untersys.tem gebildet wird.
